# EUROPEAN PATENT SPECIFICATION

(11) **EP 3 758 516 B1**
(45) Date of publication and mention of the grant of the patent: **21.10.2026**
(21) Application number: 19711424.2
(22) Date of filing: 19.02.2019
(51) Int. Cl.: A24C 5/00, G01J 3/28, G01N 21/359, G01N 21/86

(54) **A PROCESSING METHOD AND UNIT FOR PROCESSING A WEB OF THE TOBACCO INDUSTRY**
VERARBEITUNGSVERFAHREN UND EINHEIT ZUR VERARBEITUNG EINER BAHN DER TABAKINDUSTRIE
PROCÉDÉ ET UNITÉ DE TRAITEMENT POUR TRAITER UNE BANDE DE L'INDUSTRIE DU TABAC

(30) Priority: 26.02.2018 IT 201800003041
(43) Date of publication of application: 06.01.2021
(73) Proprietor: G.D S.p.A., 40133 Bologna (IT)
(72) Inventor: AMBROSINI, Davide, 40133 Bologna (IT); BALDANZA, Nicola, 40069 Zola Predosa (Bologna) (IT); CASAGRANDE, Alberto, 40013 Castel Maggiore (Bologna) (IT); TRIVISONNO, Eura, 40013 Castel Maggiore (BOLOGNA) (IT); EUSEPI, Ivan, 40013 Castel Maggiore (BOLOGNA) (IT); ZANOTTI, Maurizio, 40030 Grizzana Morandi (Bologna) (IT); FEDERICI, Luca, 40135 Bologna (IT)
(74) Representative: Persi, Patrizia
(86) International application number: PCT/IB2019/051330
(87) International publication number: WO 2019/162831

(56) References cited:
- DE-A1- 102014 223 158
- US-A- 4 718 026
- US-A- 4 971 077
- US-A1- 2003 197 126

## Description

This invention relates to a method and a unit for processing a web with which it is possible to realise a rod destined for a smoking article of the tobacco industry.

In particular, this invention relates to a method and a unit for processing a web, in which the web comprises a main component and at least an additional component.

In the tobacco industry, the use of a web, comprising a main component and an additional component, to realise a rod destined for a smoking article has been known for some time now.

The web is usually fed from a reel and is processed after it has been advanced along an advancement path. Finally, the processed web is collected to realise the rod, which has a substantially cylindrical shape.

A web whose main component is tobacco is used to realise a rod, or pieces of rod, which are tobacco-based for traditional type filter cigarettes, that is to say, which can be smoked by burning the end of the cigarette opposite to the filter, or for cigarettes which heat the tobacco-based piece, generating aerosols without combustion.

The additional component may, for example, be glycerol (also called vegetable glycerin or polyethylene glycol 400) or alternatively propylene glycol, which is used for its moisture preserving properties and to enhance the flavours present, in the form of volatile substances, in the tobacco. In addition to the glycerol, the web may also comprise a further additional component, such as water, since it is necessary that in the rod the tobacco has the correct humidity.

The tobacco flavours are breathed in and out and perceived in the mouth and nose by means of a "smoke" which, above all in combustion-free cigarettes, is not derived from combustion of the tobacco but is a vapour from the heating of the tobacco and is emphasised by the presence of the glycerol or the propylene glycol.

A web whose main component is for example a material derived from cellulose, or polylactic acid PLA, may advantageously be used to realise (that is to say, make) a rod, or pieces of rod, based on filtering material for cigarette filters. In this case, the additional component may be for example menthol, triacetin, propylene glycol or glycerol.

For example, triacetin is usually used to realise filters because of its organic plasticising properties, since it can give the filter compactness and hardness.

In order to realise the smoking article with predetermined quality, the rod with which the smoking article is realised must meet the quality requirements set and, consequently, the web from which the rod has been obtained must comply with those quality principles.

For example, the additional component must be evenly distributed in the web and in a quantity equal to a nominal quantity. For example, a nominal percentage quantity of the additional component in the web may be necessary so that the rod, obtained by processing the web and collecting it, is of the required quality.

The Applicant has observed that the additional component in the web may be unevenly distributed. Consequently, some parts of the web may have a quantity of additional component different to the nominal quantity.

In addition, the quantity of additional component may change over time, if the additional component is volatile.

If the web wound in a reel remains for a long period in a warehouse in sub-optimal storage conditions, the quantity of additional component in the web could change over time and at the moment of use in a smoking article production plant, the additional component in the web could no longer be in the required quantity.

The parts of web with an additional component in a quantity different to a nominal quantity may give rise to poor quality articles, which will be rejected, if the quantity of the additional component is outside of an established acceptability range.

Moreover, the Applicant has also observed that the quantity of additional component in the web may affect the processing carried out on the web, in the sense that the processing might not be carried out correctly.

The lack of homogeneity in the web composition may, therefore, result in a lack of homogeneity in processing of the web and so result in defective articles, which will be rejected.

US4971077 shows a tobacco evaluation system and method which comprises: a tobacco moving apparatus; a vertical tube for feeding the tobacco to the moving apparatus; a system for maintaining a constant tobacco height in the feed tube; an infra-red detection system, which is connected to the feed tube to detect the concentration of menthol in the tobacco.

DE102014223158 shows a method for metering sauces in a tobacco contained in a drum, which comprises pouring sauce into the drum by means of a metering device, in which the quantity of sauce poured into the metering device is regulated by means of measuring signals from an NIR sensor.

US4718026 shows a method for identifying constituents of cigarette paper by scanning a region of the infra-red spectrum of the paper. US2003/197126 shows an apparatus and method for detecting impurities in a material in which a plurality of infra-red ray components is applied to the material arranged on a conveyor, the reflection intensities are measured at each specific respective wavelength and the measured reflection intensities are compared with specific reflection intensities of the material detected, so as to determine the impurities of the material based on the result of the comparison.

The aim of this invention is to propose a method and a unit for processing a web, with which it is possible to realise a rod destined for a smoking article of the tobacco industry, which overcome one or more of the above-mentioned disadvantages of the prior art.

In particular, the aim of this invention is to provide a method for processing a web, comprising a main component and an additional component, with which it is possible to realise a rod destined for a smoking article of the tobacco industry, which allows an improvement in the efficiency of the production process and an improvement in the quality of the finished product.

A further aim of this invention is to propose a unit for processing a web comprising a main component and an additional component, with which it is possible to realise a rod destined for a smoking article of the tobacco industry, which allows the ascertaining of a lack of homogeneity of the web due to a non-nominal quantity of the additional component.

The technical purpose indicated and the aims specified are achieved by a method and a unit for processing a web comprising the technical characteristics set out in one or more of the appended claims.

Further features and advantages of this invention will be more apparent from the indicative, non-limiting description of a preferred, non-limiting embodiment of a method and a unit for processing a web, with which it is possible to realise a rod destined for a smoking article of the tobacco industry, as illustrated in the accompanying drawings in which:
- Figure 1 shows an operating diagram of a unit for processing a web, with which it is possible to realise a rod destined for a smoking article of the tobacco industry, according to an embodiment of this invention;
- Figure 2 shows a perspective schematic view of a hyperspectral inspection station according to an embodiment of this invention, with some parts cut away to better illustrate others.

With reference to the accompanying figures, the numeral 1 denotes in its entirety a unit for processing a web 2, with which it is possible to realise a rod 3 destined for a smoking article (not illustrated) of the tobacco industry. The web 2 comprises a main component and at least an additional component.

According to this invention the main component of the web may be for example a tobacco-based material (reformed, pre-treated, homogenised tobacco), or a material for filters (cellulose-based, or polylactic acid PLA-based).

The additional component of the web may be at least one additive used in the sector of production of smoking articles, for example flavours, plasticisers, preservatives, humectants, etc.

The additional component may preferably be selected from among alcohols, esters of acetic acid, water and mixtures thereof.

The alcohols may be selected from among aromatic or aliphatic alcohols, cyclic or non-cyclic, optionally branched, such as menthol.

The alcohols may even include polyols, for example glycols and triols, specifically propylene glycol and glycerol.

An esters of acetic acid is, for example, triacetin.

In one embodiment, the additional component may preferably be selected from among menthol, propylene glycol, glycerol, triacetin, water and mixtures thereof.

If the main component is tobacco-based, the additional component is preferably selected from among glycerol, water and mixtures thereof.

If the main component is filter material-based, the additional component is preferably selected from among triacetin, menthol, propylene glycol, glycerol and mixtures thereof.

The processing unit 1 comprises a web 2 advancement assembly 4 which is configured to advance the web 2 along an advancement path P indicated by the corresponding arrow in the accompanying figures.

The processing unit 1 also comprises a processing station 5, for processing the web 2 and a collecting station 6, for collecting the processed web 2 and realising the rod 3.

The advancement assembly 4 may optionally comprise a feeding station 401 for feeding the web 2, which preferably has at least two reels 402 and 403, in which alternately a first reel 402 is operational and a second reel 403 is for replenishing and vice versa. In other words, alternately when the first reel 402 is unwound, the second reel 403 is not unwound, and when one finishes the other is fed in such a way as to guarantee continuity in the feeding of the web 2. The finished reel is then replaced with a new reel.

In particular the two reels 402, 403 are preferably mounted on a rotatable tower 404 which, at the end of unwinding of the first reel 402, by rotating, allows unwinding of the second reel 403.

The advancement assembly 4 may also comprise a splicing station 405, configured to join together a tail end (not illustrated) of a first web 2' of the first reel 402 and a front end (not illustrated) of a second web 2" of the second reel 403, in such a way that the web 2 is continuous.

The web 2' and 2" unwound from the reels 403, 404 will then be processed by the processing station 5, as described in detail below in this description.

The advancement assembly 4 may also comprise, along the advancement path P, one or more systems for adjusting the tension of the web 2, which may for example be made using dancer rollers, not illustrated in the accompanying figures.

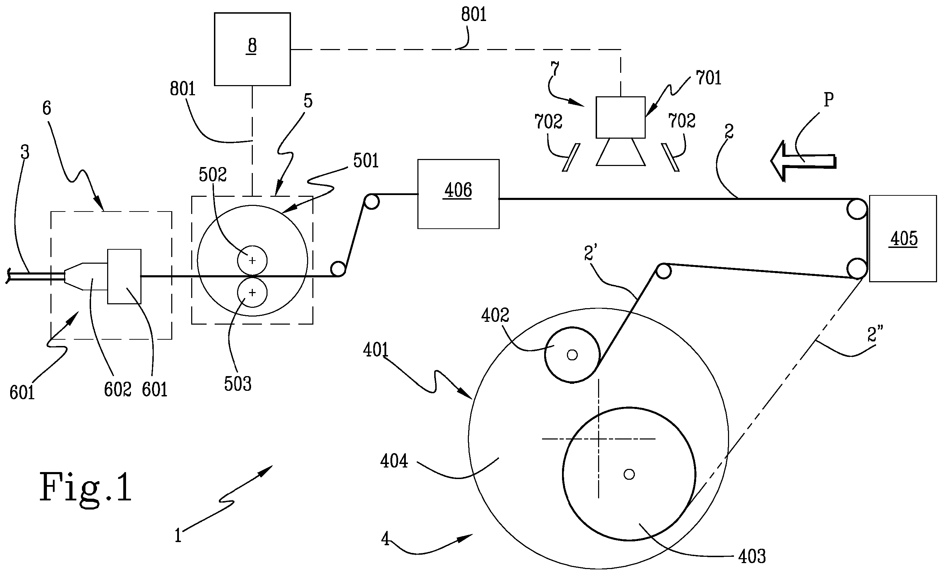

Optionally, the processing unit 1 also comprises a storage unit 406 configured to partly store the web 2 being advanced along the path P. In other words, the function of the storage unit 406 (schematically illustrated in Figure 1) is to create a dynamic buffer which can be used in various situations to avoid interrupting the production cycle (as is known in the sector).

In the case illustrated in Figure 1, the processing station 5 for processing the web 2 comprises a crimping station 501, which in turn comprises two crimping rollers 502, 503 which are operatively coupled so as to realise a plurality of longitudinal facilitated folding lines (not illustrated) on the web 2, when the web 2 passes through the crimping station 501, and to obtain a crimped web.

The term "crimping" refers generally to creating a plurality of longitudinal facilitated folding lines on a web, preferably continuous, sliding between the two rollers 502, 503 of the crimping station 501, which are configured to modify a geometry of a cross-section of the web 2.

By means of crimping, a web 2 is obtained which has an undulating or a zigzag cross-section in which the longitudinal crests are defined by the facilitated folding lines impressed by the crimping rollers 502, 503.

In particular, crimping of the continuous web 2 comprising a tobacco-based main component allows that web 2 to be used to realise traditional type filter cigarettes, or combustion-free cigarettes.

In the same way, crimping of the continuous web 2 comprising a filter material-based main component allows that web 2 to be used to realise traditional type filter cigarettes, or combustion-free cigarettes (in particular, in this case, to realise pieces of filter of such types of cigarettes).

The collecting station 6 is configured to progressively collect the crimped web up until it forms it into a rod 3.

The collecting station 6 may comprise a deforming device 601, configured to receive the web from the processing station 5 and to deform the processed web 2, giving it a partly cylindrical shape. The collecting station 6 may also comprise a forming device 602, shaped like a tapered tubular duct, configured to receive the deformed web 2 from the deforming device 601 and to shape the web 2 in the substantially cylindrical shape to define the rod 3.

According to one possible embodiment of this invention, the processing station 5 comprises a cutting station (not illustrated) which comprises two cutting rollers operatively coupled to one another so as to realise at least one longitudinal cut on the web 2 and subdivide the web 2 into a respective plurality of webs having a small width.

In the case of the cutting station, the collecting station 6 is configured to progressively collect the cut web 2 up until it forms it into a rod 3.

The processing station 5 may comprise the crimping station 501 or, alternatively, the cutting station.

However, according to another possible embodiment, the processing station 5 may comprise both the crimping station 501 and the cutting station, the latter positioned upstream or downstream of the crimping station 501, to realise the longitudinal cuts before or after crimping the web 2.

According to yet another embodiment, the processing station 5 may comprise both the crimping station 501 and the cutting station which can coincide. For example, in this case, the processing station 5 may comprise a pair of rollers which perform both cutting and folding of the web 2. Cutting of the continuous web 2, comprising a filter material-based or tobacco-based main component, allows that web 2 to be used to realise traditional type filter cigarettes, or combustion-free cigarettes.

However, it is clear that in this description, the web 2 processing which is carried out in the processing station 5 may be of any type, and is not limited to the examples described here (for example, it may be, in addition to what has been described, tensioning, incision, etc. of the web 2). According to this invention, the processing unit 1 additionally comprises a hyperspectral inspection station 7 for inspecting the web 2, which is configured to obtain a quantitative measurement of the additional component of the web 2.

The hyperspectral inspection station 7 may be positioned upstream or downstream of the processing station 5 along the advancement path P.

Thanks to the hyperspectral inspection station 7, which carries out a spectral analysis of the web 2, it is possible to measure the quantity of the additional component relative to the main component thanks to "spectral signatures" of the additional component, which identify the additional component.

Clearly, this is valid for each additional component present in the web 2.

Advantageously, the quantity measurement may be recorded and saved for evaluations of the operation of the processing unit 1. If a treatment unit (not illustrated) for the rod 3 produced at outfeed is positioned downstream of the processing unit 1, the quantity measurement may also be recorded and saved for evaluations carried out by the treatment unit.

The hyperspectral inspection station 7 is configured to perform a hyperspectral analysis of the web 2.

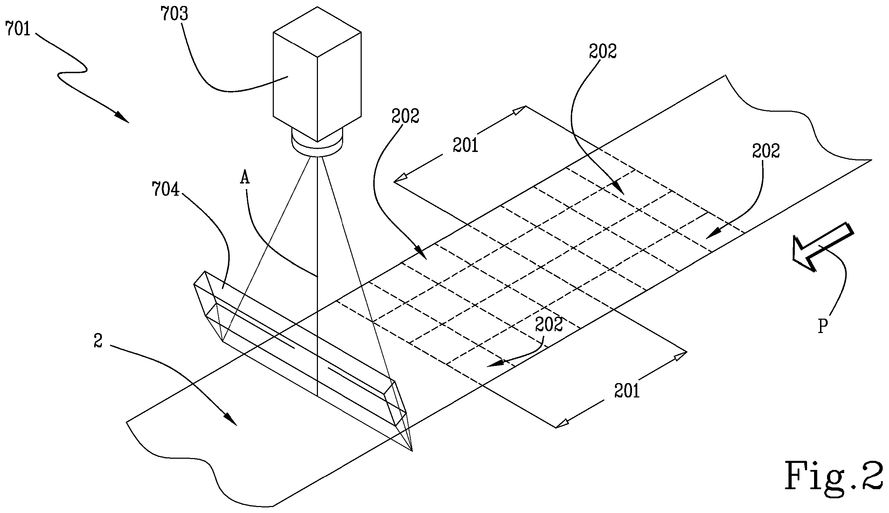

In detail, in particular with reference to Figure 2, the hyperspectral inspection station 7 is configured to obtain a hyperspectral image of a zone 201 of the web 2, which comprises at least one portion 202 and comprises:
- a hyperspectral optical apparatus 701, which is configured to obtain, in the portion 202, a plurality of quantitative measurements of the additional component which are carried out at respective positions;
- a processing device (not illustrated), which is configured to assign to each portion 202 a representative value of the plurality of said quantitative measurements obtained by the hyperspectral optical apparatus 701.

The representative value may be obtained by means of a simple average of the plurality of measurements (for example the average value), or a weighted average of the same measurements. Alternatively, amongst all of the quantitative measurements, the representative value can be assigned a quantitative measurement obtained at a specific position (not illustrated) of the portion 202.

As illustrated in Figure 2, the zone 201 of the web 2 comprises a plurality of portions 202.

The subdivision of the web 2 into zones 201 and the subdivision of each zone 201 into portions 202, in each of which it is possible to obtain a plurality of quantitative measurements of the additional component carried out at respective positions, allows the obtainment in each portion 202 of a representative value of the quantity of the component and therefore a quantitative percentage of the additional component in the web 2.

It should be noticed that both the size of each zone 201 and the size of each portion 202 are configurable, to guarantee great measurement flexibility.

Thanks to the subdivision of each zone 201 of the web 2 into portions 202, the quantitative measurement of the additional component in the web 2 can be identified in a very detailed way, for example by selecting portions 202 with smaller sizes and with a large number of quantitative measurements, and that allows the supplying of a precise quantitative distribution of the additional component in the web 2.

In contrast, the quantitative measurement of the additional component may be identified in a general way, if large portions 202 are selected and in each portion only a few quantitative measurements are carried out, for example so as to check that the quantity of additional component in the web 2 is within a range of preset nominal values and where there is no interest in a precise quantitative distribution of the additional component in the web 2.

In other words, the dimensions of each portion 202 and the number of quantitative measurements in each portion 202 may be selected to suit the type of web 2 to be inspected and relative to the type of quantitative measurement to be carried out.

The hyperspectral inspection station 7 additionally comprises an emitter/generator of electromagnetic radiations 702 (schematically illustrated in Figure 1), which is configured to emit electromagnetic radiations onto at least a part of web 2 in a spectral range containing a plurality of contiguous wavelength bands. The generator/emitter of electromagnetic radiations 702, according to one embodiment, may comprise an illuminator.

The hyperspectral optical apparatus 701 is configured to receive the radiations (for example reflected or scatter) from said part of web 2 and to reconstruct a hyperspectral cube of the zone 201 (for example, but not exclusively during advancing of the web 2) along the advancement path P from the radiations received. From the hyperspectral cube it is possible to reconstruct a hyperspectral image of the zone 201 through the hyperspectral inspection station 7.

The hyperspectral optical apparatus 701 may be made using a one-dimensional linear sensor or a two-dimensional matrix sensor.

If the hyperspectral optical apparatus 701 is made using a one-dimensional linear sensor, the part of web 2, whose radiations are received by the hyperspectral optical apparatus 701, is a line of web 2. The hyperspectral optical apparatus 701 is configured to obtain from the line of web 2 a corresponding hyperspectral plane in the spectral range and to analyse said hyperspectral plane, reconstructing by sequential lines the hyperspectral cube of the zone 201, during advancing of the web 2.

Alternatively, if the hyperspectral optical apparatus 701 is made using a two-dimensional matrix sensor, the part of web 2, whose radiations are received by the hyperspectral optical apparatus 701, is two-dimensional and the hyperspectral cube of the zone 201 is reconstructed by hyperspectral planes which are obtained entirely from the same two-dimensional part of web 2 received. For example, the part of web framed by the hyperspectral optical apparatus 701 may be the zone 201.

Therefore, the hyperspectral optical apparatus 701 is configured to obtain a hyperspectral image from said hyperspectral cube from which to obtain, in each zone 201, the measurement of the additional component.

The generator/emitter of electromagnetic radiations 702 is preferably configured to emit electromagnetic radiations onto the web 2 in a spectral range of between 400 nm and 4000 nm, even more preferably between 950nm and 1700 nm, yet more preferably still between 1250 and 1600 nm. The hyperspectral optical apparatus 701 is respectively configured to acquire hyperspectra between 400 nm and 4000 nm, preferably between 950 nm and 1700 nm, yet more preferably still between 1250 and 1600 nm.

It should be noticed that the generator/emitter of electromagnetic radiations 702 may comprise one or more radiation emission devices. Although in Figure 1 the generator of electromagnetic radiations 702 has been shown as comprising two separate radiation emission devices, the position and the number of generators may differ from what is illustrated in Figure 1 according to inspection station 7 requirements.

The expression hyperspectal image of an object observed means a digital image in which each element of the image (pixel) is constituted not only of a number or of a set of three numbers, as is the case for normal colour images (RGB), but of a whole reflectance spectrum associated with a corresponding observed point.

An electromagnetic spectrum is the set of all of the possible electromagnetic waves and is usually subdivided into seven regions, each characterised by a different ever decreasing range of wavelengths, consisting of radio waves, micro waves, infra-red, visible, ultraviolet, X-rays and gamma rays.

Usually, in an optical apparatus for image acquisition, there is acquisition at points of an image of an object at the wavelengths perceived by the human eye and each element of the image, or pixel, is constituted of a simple monochrome value (greyscale image), or a set of three values (RGB colour image) associable with a depiction of a corresponding observed point of the object.

In contrast, each hyperspectral element of an image, or pixel, has associated with it a plurality of values, each value corresponding to the "reflectance" of the point observed at a predetermined wavelength band. The wavelength bands are selected in such a way that they are contiguous and are so numerous (from several dozen to several hundreds) that a "reflectance spectrum" can even be associated with each pixel.

The "reflectance" of a surface of a material is a number between 0 and 1, which expresses the capacity of a material to reflect the incident radiant energy.

The "reflectance spectrum" graphically expresses the "reflectance" value of the point observed with changes in the wavelength and, that is to say, at the various contiguous wavelength bands considered.

Advantageously, the greater the number of reflectance values associated with a hyperspectral "pixel" is, the greater the possibility of interpolating those values to graphically define a curve expressing the "reflectance spectrum" is.

It should be noticed that the reflectance spectrum of a point of a surface of an object which comprises multiple components is determined by the number and type of those components, as well as a relative concentration between the components. A reflectance spectrum uniquely identifies the composition of an object, at the point inspected of the surface, and is equivalent to a "spectral signature" of the composition at the point inspected, allowing very precise characterisation of the chemical and physical properties of the objects inspected.

Considering, for example a line, of web 2 to be inspected, that line is a set of contiguous elements. Considering that each element corresponds to a set of reflectance values, in a number equal to the contiguous wavelength bands used, the line of web 2 corresponds to a plane of a hyperspectral cube with width equal to the dimensions of the line to be inspected.

For the hyperspectral analysis of the web 2 the bands used are in the spectral range between 400 nm and 4000 nm, preferably between 950nm and 1700 nm, yet more preferably still between 1250 and 1600 nm.

For example, in order to acquire hyperspectra between 950 nm and 1700 nm, for a total band having width equal to 750 nm, the "reflectance spectrum" may be identified by means of a large number of values, for example up to 320, determined by means of respective contiguous wavelength bands, having a length approximately equal to 2.34 nm. Each value corresponds to the reflectance in the respective band having a length approximately equal to 2.34 nm.

As shown in Figure 2, the hyperspectral optical apparatus 701 comprises an optical device 703 for image acquisition, of the traditional type, having an optical axis A.

The optical device 703 for image acquisition, according to a first example, comprises a linear optical sensor (not illustrated) sensitive to the intensity of light received, a geometric filter (not illustrated) to allow the passage of a thin line of radiations reflected by the web 2, and a dispersion element 704, for example a prism, capable of separating the different wavelengths which make up the line of filtered radiations which pass through the geometric filter in the different contiguous bands. Each point of the line of radiations which pass through the filter is therefore broken down into the different spectral components by the prism 704, each of which is received by the linear optical sensor of the optical device 702. Usually, the hyperspectral optical apparatus 701 comprises a housing (not illustrated) which contains the optical device 702, the filter and the dispersion element 704. In the case just described, the hyperspectral image is therefore reconstructed by lines starting from hyperspectral cube planes acquired one after another, during advancing of the web 2.

In the case of a two-dimensional optical sensor, as already indicated, the geometric filter allows the passage of a two-dimensional part of reflected radiations and the hyperspectral image is reconstructed from the hyperspectral cube obtained entirely from the two-dimensional part, without the need to acquire hyperspectral planes one after another.

A hyperspectral analysis of the web 2, and that is to say of the main component and of the additional component therefore allows the obtainment, for the contiguous elements of the web 2, of a "spectral signature" capable of measuring the quantity of the additional component in the web 2.

It should be noticed that the processing device of the hyperspectral optical apparatus 701 may also be configured, not just to measure the quantity of the additional component of the web 2 in each element of the web 2, but also to reconstruct the hyperspectral image starting from the hyperspectral cube, as already indicated.

The processing device can be integrated into the hyperspectral optical apparatus or can be external and connected to it by means of a communication device 801, for example a fieldbus, an Ethernet communication network and/or Internet.

Thanks to the hyperspectral optical apparatus 701 it is possible to obtain the "spectral signatures" of the web 2 and therefore to quantitatively measure the additional component in the web 2 as previously described.

The variability of the composition of the web 2 causes a lack of homogeneity between different parts of the web 2 which may, in turn, cause a lack of homogeneity in the processing station 5 and therefore a processed web which lacks homogeneity. Consequently, clearly, also the rod 3 which is subsequently obtained by collecting the web 2 could lack homogeneity, therefore requiring the rejection of many pieces obtained by cutting that rod 3.

It is for this reason that, optionally, the processing unit 1 may comprise an adjusting device 8, which is configured to adjust the processing station 5 as a function of the quantitative measurement of the additional component obtained by the hyperspectral inspection station 7.

It should be noticed that the adjusting device 8 is connected, for example by means of the communication device 801, to the hyperspectral inspection station 7 and to the processing station 5 for receiving from the hyperspectral inspection station 7 the measurement of the additional component and for adjusting the processing station 5, based on that measured additional component.

With reference to the embodiment in which the processing station 5 comprises a crimping station 501, for example, the adjusting device 8 may act on the crimping station 501 to change crimping station 501 working parameters.

The working parameters may be for example: a distance between the two crimping rollers 502, 503; a positioning of the crimping rollers 502, 503 relative to a web 2 advancing direction; an angle of winding of the web 2 at the infeed between the crimping rollers 502, 503.

In fact, preferably at least one of the two crimping rollers 502, 503 is supported in such a way that it is adjustable relative to the other crimping roller 502, 503, for changing the reciprocal distance, the positioning or the winding angle, and the adjusting device acts on at least one of the two crimping rollers 502, 503.

In order to make the adjustment, the crimping station 501 may for example comprise a motor, not illustrated in the accompanying figures, which is active on a supporting unit (not illustrated) of the crimping rollers 502, 503 or on the crimping rollers themselves for activating a change in the position and/or orientation of the supporting unit and/or of the crimping rollers 502, 503.

According to a different example, the adjusting device 8 may act upstream of the crimping station 501, for example modifying the web 2 reel unwinding speed.

For example, if the main component of the web 2 is tobacco and if the additional component is glycerol, water or a mixture of water and glycerol, the Applicant has noticed that the greater or lesser presence of glycerol (or of the mixture of water and glycerol) compared with a predetermined quantity may affect the processing of the web 2 itself. In fact, glycerol is a viscous liquid and therefore, together with water, helps to make the web 2 viscous, that is to say, sticky, at the parts of web 2 where the glycerol is present in a percentage greater than the nominal percentage (that is to say, the predetermined one). At those parts, for example, the crimping station 501 could be more effective if the distance between the crimping rollers 502, 503 were different (for example greater) relative to the distance at which the crimping rollers 502, 503 must be placed when the glycerol in the web 2 is at the nominal quantity, or relative to a preset distance of the crimping rollers 502, 503.

In contrast, at the parts of web 2 where the glycerol is present at a lower percentage than the nominal percentage, for example, the crimping station 501 could be more effective if the distance between the crimping rollers 502, 503 were different (for example less) relative to the distance at which the crimping rollers 502, 503 must be placed when the glycerol in the web 2 is at the nominal quantity, or relative to a preset distance of the crimping rollers 502, 503.

Thanks to the inspection station 7, which allows measurement of the quantity of at least one additional component in the web 2, and thanks to the adjusting device 8, which allows adjustment of the processing station 5 as a function of the additional component, it is possible to obtain a "smart" processing unit 1, able to rapidly adapt to the characteristics of the web 2, increasing the efficiency of the production process and guaranteeing effective processing of the web 2 even after sudden changes in the composition of the web 2, for example an increase in the quantity of glycerol.

Therefore, the unit 1 according to this invention allows measurement of at least one additional component of the web 2 and control, if necessary, of an adjustment of the processing station 5, in particular the crimping station 501, to guarantee correct crimping in every situation.

What is described above relative to the crimping station 501 also applies for the cutting station, when present and is not repeated for the sake of brevity. In fact, the adjusting device 8 is configured to adjust the cutting station alternatively to the crimping station 501, or in addition to it.

According to another example, not illustrated, the inspection station 7 can be configured to emit a material non-conformity signal, intended to be received by a machine or by a production plant of which the web 2 processing unit is a part. In this case, for example, if the quantity of the additional component measured does not match the nominal quantity, a signal may be issued which indicates that the material is non-conforming: that may cause, for example, a stop of all production, or the rejection of all or part of the production (that is to say of the rod 3 or the pieces derived from the rod 3) obtained with the web 2, downstream of the processing station 5. That signal, for example, may be programmed to be activated after a number of "non-conforming" readings compared with the nominal value" and/or after a predetermined number of readings in a preset time interval.

In use, according to this invention, a method is provided for processing a web 2, with which it is possible to realise a rod 3 destined for a smoking article of the tobacco industry (not illustrated), wherein the web 2 comprises a main component and at least an additional component.

The method according to this invention comprises the following steps:
- advancing the web 2 along an advancement path P;
- carrying out a processing of the web 2;
- collecting the processed web 2 to realise the rod 3.

The method also comprises the step of performing a hyperspectral inspection of the web 2, to obtain a quantitative measurement of the additional component. The processing may be before or after the inspection.

In other words, thanks to the performing of the hyperspectral inspection, it is possible to carry out a spectral analysis of the web 2, and to measure the quantity of an additional component thanks to the different "spectral signatures" of the additional component.

Performing the hyperspectral inspection comprises the steps of obtaining a hyperspectral image of a zone 201 of the web 2; subdividing the zone 201 into at least one portion 202; in the portion, obtaining a plurality of quantitative measurements of the additional component at respective positions; assigning to each portion 202 a respective measurement equal to a representative value of the plurality of measurements of the additional component obtained.

The zone 201 is subdivided into a plurality of portions 202.

Thanks to the obtainment of a hyperspectral image of the web 2, at least in the zone 201 and thanks to the subdivision of each zone 201 into portions 202, from which to obtain a plurality of quantitative measurements, at respective positions, as already indicated, the quantitative distribution of the additional component in the web 2 can be obtained in a very precise way.

Additionally, in order to guarantee high configurability of the measurement, the method optionally comprises configuring the size of each zone 201 and of each portion 202 of the zone 201.

In order to obtain a hyperspectral image, the method comprises the following steps:
- emitting electromagnetic radiations onto at least a part of web 2 in a spectral range containing a plurality of contiguous wavelength bands;
- receiving corresponding radiations (for example reflected or scatter) from said part of web 2 in a hyperspectral optical apparatus 701;
- reconstructing a hyperspectral cube of the zone 201 of the web 2 from the radiations received;
- obtaining a hyperspectral image from said hyperspectral cube in order to obtain the quantitative measurement of the additional component.

In order to reconstruct the hyperspectral cube, if the hyperspectral optical apparatus 701 is made using a one-dimensional linear sensor, the method according to this invention comprises receiving a line of radiations from said part of web and obtaining, from that line of web 2, a corresponding hyperspectral plane which represents said spectral range. Analysing said hyperspectral plane, the method comprises reconstructing by sequential lines the hyperspectral cube of the zone 201, during advancing of the web 2.

If in contrast the hyperspectral optical apparatus 701 is made using a two-dimensional sensor, the method according to this invention comprises receiving radiations from a two-dimensional part of web 2 and obtaining hyperspectral planes entirely from that two-dimensional part for reconstructing the hyperspectral cube of the zone 201.

In other words, advantageously, if the method comprises using a hyperspectral optical apparatus 701 with a two-dimensional sensor, it is possible to receive radiations from the whole zone 201 framed.

Thanks to the possibility of obtaining a hyperspectral image of the web 2 by construction of the hyperspectral cube, there is the guaranteed possibility of having a "spectral signature" of the web 2 and therefore of obtaining the composition of the web 2.

Thanks to the hyperspectral image, the additional component in the web 2 is quantitatively measured. If there are two or more additional components present in the web 2, clearly this is valid for each additional component. According to one variant of the method according to this invention, there is a step of emitting electromagnetic radiations in a spectral range of between 400 nm and 4000 nm, preferably between 950 nm and 1700 nm, still more preferably between 1250 and 1600 nm.

Advantageously, using this spectral range, the Applicant has noticed high precision in the measurement obtained, both with a tobacco-based main component and with a filter material-based main component. The additional component, preferably selected from among the substances listed above, has a "spectral signature" different from the spectral signature of the main component.

Specifically, if the main component comprises mostly tobacco and the additional component is included in the group made up of glycerol and water and mixtures thereof, the generator of radiations 702 may emit electromagnetic radiations onto the web 2 within the spectral range of between 950nm and 1700 nm and the hyperspectral optical apparatus 701 may acquire spectra of between 950nm and 1700 nm, for measuring the quantity of glycerol and/or water in the web 2 mostly comprising tobacco. The "spectral signatures" of glycerol and tobacco, in these spectral ranges, are very different from each other and easily identifiable.

The processing method may also comprise the further step of adjusting the processing step as a function of the quantitative measurement obtained of the additional component.

In detail, in the presence of crimping rollers 502, 503 of a crimping station 501, as already indicated, the adjusting step may comprise adjusting the distance between the two crimping rollers 502, 503 as a function of the quantitative measurement obtained of the additional component.

Thanks to the adjusting step, it is therefore possible to rapidly adapt the processing of the web 2 to the characteristics of the web 2, increasing the efficiency of the production process and guaranteeing effective processing of the web 2, therefore reducing any defects in the smoking article and improving the efficiency of the production plant.

It should be noticed that the hyperspectral inspection may be performed continuously during advancing of the web 2, when the hyperspectral inspection of the web 2 is performed, as already indicated, by sequential lines using the optical apparatus 701 with linear sensor. In contrast, if the hyperspectral inspection is performed using the optical apparatus 701 with two-dimensional sensor, the hyperspectral inspection of the web 2 may also be performed during a pause in the advancing of the web 2, if the web 2 is made to advance with intermittent motion.

The step of performing the hyperspectral inspection so as to obtain the quantitative measurement of the additional component is a measuring step, which is performed during operation of the processing unit 1.

The method according to this invention may also comprise a further step of configuration, which precedes the measuring step.

The configuration step comprises the step of performing a hyperspectral inspection of a reference part of the web 2 in order to obtain, in an instant in time, a reference quantitative measurement of the additional component in the reference part, to be used as a measuring reference in the subsequent measuring step.

The reference part may be a piece of web 2, for example the initial part of the web 2.

It should be noticed that, thanks to the spectral analysis of the web 2 in the configuration step, not only is it possible to measure the quantity of additional component in the web 2 but, advantageously, it could also be possible to recognise "which" additional component it is.

Identification, in the configuration step, of the additional component present and of the "quantity" of the additional component allows the definition of a measuring reference relative to which, in the measuring step, variations in the additional component may be highlighted.

Preferably, the configuration step is performed each time the web 2 is substituted, with another having different characteristics, for example due to a production batch change, so as to create a measuring reference that is always up-to-date for the web 2 used.

In addition to the configuration step, the method according to this invention may also comprise a further other step of initialisation of the hyperspectral optical apparatus 701, which also precedes the measuring step.

The initialisation step comprises performing at least one hyperspectral inspection of an object, which has known characteristics and is different from the web 2. For example, a hyperspectral inspection may be performed on an object made of black plastic material with suitable thickness, in the absence of emission of electromagnetic radiations incident on the object, for the purpose of measuring the so-called "dark noise" of the optical apparatus 701, that is to say, a background noise present during the acquisitions performed by the hyperspectral optical apparatus 701.

The initialisation step allows adjustment of the working parameters of the hyperspectral inspection, subsequently performed during the measuring step, for example the background noise of the optical apparatus 701.

Optionally, the initialisation step may also comprise a further hyperspectral inspection of a further object, which has known characteristics and is different from both the object and the web 2, and for example is made of optical Teflon or barium sulphate.

The further hyperspectral inspection comprises emitting electromagnetic radiations incident on the further object, for the purpose of measuring the so-called "white noise" of the optical apparatus 701, that is to say, a surrounding noise caused by the environment around the optical apparatus.

In other words, the further hyperspectral inspection by means of emission of electromagnetic radiations incident on the further object, is for the purpose of measuring the "spectral signature" of the further object, whose spectral response is known, and consequently deriving said surrounding noise from the comparison between the measured spectral signature and the known spectral signature. In that way it is possible to very precisely calibrate the optical apparatus.

The initialisation step also allows adjustment, for example, of the optical apparatus 701 surrounding noise.

In order to allow that initialisation step, the inspection station may comprise a positioning device, configured to receive from an operator the object, or the further object, placed in a home position, with which to carry out the initialisation. The positioning device may also be configured to shift that object from the home position to an operating position at the hyperspectral optical apparatus 701, in such a way that the inspection station can proceed with the initialisation. The inspection station may activate the positioning device again at the end of the initialisation step for again shifting the object, from the operating position to the home position, thereby allowing the operator to extract the object, or the further object, before the operating step.

Advantageously, the initialisation step precedes the configuration step. Thanks to the initialisation step and thanks to the presence of the positioning device, the hyperspectral optical apparatus 701 may be initialised without any intervention by the operator.

## Claims

1. A processing method for processing a web (2) with which it is possible to realise a rod (3) destined for a smoking article of the tobacco industry, wherein the web (2) comprises a main component and at least an additional component; the method comprising the following steps:
- advancing the web (2) along an advancement path (P);
- carrying out a processing of said web (2);
- collecting the processed web to realise the rod (3); wherein it further comprises a step of:
- performing a hyperspectral inspection of the web (2) to obtain a quantitative measurement of the additional component in the web (2); wherein said step of performing a hyperspectral inspection further comprises steps of:
- obtaining a hyperspectral image of a zone (201) of the web (2);
- subdividing the zone (201) into a plurality of portions (202);
- obtaining, in each portion (202), a plurality of quantitative measurements of the additional component at the respective positions;
- attributing to each portion (202) a respective measurement equal to a representative value of the plurality of said quantitative measurements obtained.

2. The method according to claim 1, wherein said step of obtaining a hyperspectral image comprises following steps:
- emitting electromagnetic radiations on at least a part of web (2) in a spectral range containing a plurality of contiguous wavelength bands;
- receiving corresponding radiations from the web (2) from said part in a hyperspectral optical apparatus (701);
- reconstructing a hyperspectral cube of the zone (201) of the web (2) starting from said radiations received;
- obtaining a hyperspectral image from said hyperspectral cube.

3. The method according to any one of the preceding claims, wherein the additional component is selected from among alcohols, esters of acetic acid, water and mixtures thereof.

4. The method according to claim 3, wherein the additional component is selected from among menthol, propylene glycol, glycerol, triacetin, water and mixtures thereof, preferably from glycerol, water and mixtures thereof.

5. The method of any one of claims 2 to 4, wherein the step of emitting electromagnetic radiations comprises using a spectral range comprised between 400 nm and 4000 nm, preferably comprised between 950 nm and 1700 nm, still more preferably comprised between 1250 and 1600 nm.

6. The method of any one of the preceding claims, and comprising the further step of adjusting said processing step as a function of the quantitative measurement obtained of the additional component.

7. The method of any one of the preceding claims, and wherein the step of processing the web (2) comprises a step of crimping the web (2) between two crimping rollers (502, 503) operatively coupled so as to realise a plurality of longitudinal facilitated folding lines on the web (2) and wherein the collecting step comprises progressively collecting the crimped web up to forming a rod (3) therefrom.

8. The method according to claim 7, when dependent on claim 6, wherein the step of adjusting the processing step comprises adjusting a reciprocal distance between said two crimping rollers (502, 503) as a function of the quantitative measurement obtained of additional component.

9. The method of any one of claims 1 to 6, wherein the processing step comprises cutting the web (2) between two cutting rollers operatively coupled to one another to realise at least a longitudinal cut on the web to subdivide the web into at least two webs having a small width and wherein the collecting step comprises progressively collecting the cut web up to forming the cut web into a rod (3).

10. The method according to any one of the preceding claims, wherein said step of performing the hyperspectral inspection to obtain the quantitative measurement of the additional component is a measuring step which is carried out following an initialisation step; and wherein the initialisation step comprises a step of performing at least a hyperspectral inspection of an object having known characteristics and that is different from the web (2) in order to adjust working parameters of the hyperspectral inspection subsequently performed during the measuring step.

11. A processing unit for processing a web (2), with which it is possible to realise a rod (3) destined for a smoking article of the tobacco industry, wherein the web (2) comprises a main component and at least an additional component; the unit (1) comprising:
- an advancement assembly (4) of the web (2) which is configured to advance the web (2) along an advancement path (P);
- a processing station (5) for processing said web (2);
- a collecting station (6) for collecting the processed web (2) and realising the rod (3), wherein the unit (1) further comprises:
- a hyperspectral inspection station (7) of the web (2), configured to obtain a quantitative measurement of the additional component, wherein said inspection station (7) is arranged along the advancement path (P); wherein the hyperspectral inspection station (7) is configured to obtain a hyperspectral image of a zone (201) of the web (2) subdivided into a plurality of portions (202) and comprises:
- a hyperspectral optical apparatus (701), which is configured to obtain, in each portion (202), a plurality of quantitative measurements of the additional component at respective positions;
- a processing device, which is configured to attribute to each portion (202) a representative value of the plurality of measurements obtained by the hyperspectral optical apparatus (701) in the portion (202).

12. The unit according to claim 11, wherein the hyperspectral inspection station (7) additionally comprises a generator/emitter of electromagnetic radiations (702), which is configured to emit electromagnetic radiations onto at least a part of web (2) in a spectral range containing a plurality of contiguous wavelength bands; and wherein the hyperspectral optical apparatus (701) is configured to
- receive corresponding radiations from said part of web (2);
- reconstruct a hyperspectral cube of the zone (201) of the web (2) starting from the radiations received;
- obtain a hyperspectral image from said hyperspectral cube.

13. The unit according to claim 12, wherein the generator/emitter of electromagnetic radiations (702) is configured to emit electromagnetic radiations in a spectral range comprised between 400 nm and 4000 nm, preferably comprised between 950 nm and 1700 nm, still more preferably comprised between 1250 nm and 1600 nm, and wherein the hyperspectral optical apparatus (701) is respectively configured to acquire hyperspectra comprised between 400 nm and 4000 nm, preferably between nm 950 nm and 1700 nm, still more preferably comprised between 1250 nm and 1600 nm.

14. The unit according to one of claims from 11 to 13, wherein the processing station (5) comprises a crimping station (501), which comprises two crimping rollers (503, 504) operatively coupled so as to realise a plurality of longitudinal facilitated folding lines on the web (2), and wherein the collecting station (6) is configured to progressively collect the crimped web up to forming a rod (3) therefrom.

15. The unit according to one of claims from 11 to 14, wherein the processing station (5) comprises a cutting station, which comprises two cutting rollers operatively coupled to one another so as to realise at least a longitudinal cut on the web (2) and to subdivide the web (2) into a plurality of webs having a small width, and wherein the collecting station (6) is configured to progressively collect the cut web up to forming a rod (3) therefrom.

## Patentansprüche

1. Verarbeitungsverfahren zur Verarbeitung einer Bahn (2), mit der es möglich ist, einen Stab (3) für einen Rauchartikel der Tabakindustrie herzustellen, wobei die Bahn (2) eine Hauptkomponente und mindestens eine zusätzliche Komponente umfasst; wobei das Verfahren die folgenden Schritte umfasst:
- Vorschieben der Bahn (2) entlang eines Vorschubpfads (P);
- Ausführen einer Verarbeitung der Bahn (2);
- Sammeln der verarbeiteten Bahn zum Herstellen des Stabs (3);
wobei es ferner einen Schritt umfasst, zum:
- Durchführen einer hyperspektralen Inspektion der Bahn (2), um eine quantitative Messung der zusätzlichen Komponente in der Bahn (2) zu erhalten;
wobei der Schritt zum Durchführen einer hyperspektralen Inspektion ferner die folgenden Schritte umfasst:
- Erhalten eines hyperspektralen Bildes einer Zone (201) der Bahn (2);
- Unterteilen der Zone (201) in eine Vielzahl von Abschnitten (202);
- Erhalten, in jedem Abschnitt (202), einer Vielzahl von quantitativen Messungen der zusätzlichen Komponente an den jeweiligen Positionen;
- Zuschreiben einer jeweiligen Messung zu jedem Abschnitt (202), die einem repräsentativen Wert der Vielzahl der erhaltenen quantitativen Messungen gleich ist.

2. Verfahren nach Anspruch 1, wobei der Schritt zum Erhalten eines hyperspektralen Bildes die folgenden Schritte umfasst:
- Ausstrahlen von elektromagnetischen Strahlungen auf mindestens einen Teil der Bahn (2) in einem Spektralbereich, der eine Vielzahl von zusammenhängenden Wellenlängenbändern enthält;
- Empfangen der entsprechenden Strahlungen von der Bahn (2) von dem Teil in einer hyperspektralen optischen Vorrichtung (701);
- Rekonstruieren eines hyperspektralen Würfels der Zone (201) der Bahn (2) ausgehend von den empfangenen Strahlungen;
- Erhalten eines hyperspektralen Bildes aus dem hyperspektralen Würfel.

3. Verfahren nach einem der vorhergehenden Ansprüche, wobei die zusätzliche Komponente aus Alkoholen, Essigsäureestern, Wasser und Mischungen davon ausgewählt ist.

4. Verfahren nach Anspruch 3, wobei die zusätzliche Komponente aus Menthol, Propylenglykol, Glycerin, Triacetin, Wasser und Mischungen davon ausgewählt ist, vorzugsweise aus Glycerin, Wasser und Mischungen davon.

5. Verfahren nach einem der Ansprüche 2 bis 4, wobei der Schritt zum Ausstrahlen von elektromagnetischen Strahlungen die Verwendung eines Spektralbereichs umfasst, der zwischen 400 nm und 4000 nm, bevorzugt zwischen 950 nm und 1700 nm, noch bevorzugter zwischen 1250 und 1600 nm liegt.

6. Verfahren nach einem der vorhergehenden Ansprüche, und umfassend den weiteren Schritt zum Einstellen des Schritts zum Verarbeiten in Abhängigkeit von der erhaltenen quantitativen Messung der zusätzlichen Komponente.

7. Verfahren nach einem der vorhergehenden Ansprüche, und wobei der Schritt zum Verarbeiten der Bahn (2) einen Schritt zum Crimpen der Bahn (2) zwischen zwei Crimpwalzen (502, 503) umfasst, die betriebswirksam so miteinander gekoppelt sind, dass sie eine Vielzahl von in Längsrichtung erleichterten Faltlinien auf der Bahn (2) herstellen, und wobei der Schritt zum Sammeln das schrittweise Sammeln der gecrimpten Bahn umfasst, bis daraus ein Stab (3) gebildet wird.

8. Verfahren nach Anspruch 7, wenn abhängig von Anspruch 6, wobei der Schritt zum Einstellen des Schritts zum Verarbeiten das Einstellen eines gegenseitigen Abstands zwischen den beiden Crimpwalzen (502, 503) in Abhängigkeit von der erhaltenen quantitativen Messung der zusätzlichen Komponente umfasst.

9. Verfahren nach einem der Ansprüche 1 bis 6, wobei der Schritt zum Verarbeiten das Schneiden der Bahn (2) zwischen zwei betriebswirksam miteinander gekoppelten Schneidwalzen umfasst, um mindestens einen Längsschnitt an der Bahn herzustellen und die Bahn in mindestens zwei Bahnen mit geringer Breite zu unterteilen, und wobei der Schritt zum Sammeln das schrittweise Sammeln der geschnittenen Bahn umfasst, bis daraus ein Stab (3) gebildet wird.

10. Verfahren nach einem der vorhergehenden Ansprüche, wobei der Schritt zum Durchführen der hyperspektralen Inspektion zum Erhalten der quantitativen Messung der zusätzlichen Komponente ein Messschritt ist, der im Anschluss an einen Initialisierungsschritt ausgeführt wird; und wobei der Initialisierungsschritt einen Schritt zum Durchführen mindestens einer hyperspektralen Inspektion eines Objekts mit bekannten Eigenschaften umfasst, das sich von der Bahn (2) unterscheidet, um die Arbeitsparameter der anschließend während des Messschritts durchgeführten hyperspektralen Inspektion einzustellen.

11. Verarbeitungseinheit zur Verarbeitung einer Bahn (2), mit der es möglich ist, einen Stab (3) für einen Rauchartikel der Tabakindustrie herzustellen, wobei die Bahn (2) eine Hauptkomponente und mindestens eine zusätzliche Komponente umfasst; wobei die Einheit (1) folgendes umfasst:
- eine Vorschubanordnung (4) der Bahn (2), die so ausgelegt ist, dass sie die Bahn (2) entlang eines Vorschubpfads (P) vorschiebt;
- eine Verarbeitungsstation (5) zum Verarbeiten der Bahn (2);
- eine Sammelstation (6) zum Sammeln der verarbeiteten Bahn (2) und zum Herstellen des Stabs (3), wobei die Einheit (1) ferner Folgendes umfasst:
- eine hyperspektrale Inspektionsstation (7) der Bahn (2), die so ausgelegt ist, dass sie eine quantitative Messung der zusätzlichen Komponente erhält, wobei die Inspektionsstation (7) entlang des Vorschubpfads (P) angeordnet ist;
wobei die hyperspektrale Inspektionsstation (7) so ausgelegt ist, dass sie ein hyperspektrales Bild einer in eine Vielzahl von Abschnitten (202) unterteilten Zone (201) der Bahn (2) erhält, und Folgendes umfasst:
- eine hyperspektrale optische Vorrichtung (701), die so ausgelegt ist, dass sie in jedem Abschnitt (202) eine Vielzahl von quantitativen Messungen der zusätzlichen Komponente an jeweiligen Positionen erhält;
- eine Verarbeitungsvorrichtung, die so ausgelegt ist, dass sie jedem Abschnitt (202) einen repräsentativen Wert aus der Vielzahl von Messungen zuschreibt, die durch die hyperspektrale optische Vorrichtung (701) in dem Abschnitt (202) erhalten wurden.

12. Vorrichtung nach Anspruch 11, wobei die hyperspektrale Inspektionsstation (7) zusätzlich einen Generator/Sender elektromagnetischer Strahlungen (702) umfasst, der so ausgelegt ist, dass er elektromagnetische Strahlungen auf mindestens einen Teil der Bahn (2) in einem Spektralbereich ausstrahlt, der eine Vielzahl von zusammenhängenden Wellenlängenbändern enthält; und wobei die hyperspektrale optische Vorrichtung (701) so ausgelegt ist, dass sie
- entsprechende Strahlungen von dem Abschnitt der Bahn (2) empfängt;
- ausgehend von den empfangenen Strahlungen einen hyperspektralen Würfel der Zone (201) der Bahn (2) rekonstruiert;
- aus dem hyperspektralen Würfel ein hyperspektrales Bild erhält.

13. Einheit nach Anspruch 12, wobei der Generator/Sender elektromagnetischer Strahlungen (702) so ausgelegt ist, dass er elektromagnetische Strahlungen in einem Spektralbereich zwischen 400 nm und 4000 nm, vorzugsweise zwischen 950 nm und 1700 nm, noch bevorzugter zwischen 1250 nm und 1600 nm, ausstrahlt, und wobei die hyperspektrale optische Vorrichtung (701) jeweils so ausgelegt ist, dass sie Hyperspektren im Bereich zwischen 400 nm und 4000 nm, vorzugsweise zwischen 950 nm und 1700 nm, noch bevorzugter zwischen 1250 nm und 1600 nm, erfasst.

14. Vorrichtung nach einem der Ansprüche 11 bis 13, wobei die Verarbeitungsstation (5) eine Crimpstation (501) umfasst, die zwei Crimpwalzen (503, 504) umfasst, die betriebswirksam so miteinander gekoppelt sind, dass sie eine Vielzahl von in Längsrichtung erleichterten Faltlinien auf der Bahn (2) herstellen, und wobei die Sammelstation (6) so ausgelegt ist, dass sie die gecrimpten Bahn schrittweise sammelt, bis daraus ein Stab (3) gebildet wird.

15. Einheit nach einem der Ansprüche 11 bis 14, wobei die Verarbeitungsstation (5) eine Schneidestation umfasst, die zwei betriebswirksam miteinander gekoppelte Schneidwalzen umfasst, um mindestens einen Längsschnitt an der Bahn (2) herzustellen und die Bahn (2) in eine Vielzahl von Bahnen von geringer Breite zu unterteilen, und wobei die Sammelstation (6) so ausgelegt ist, dass sie die geschnittene Bahn schrittweise sammelt, bis daraus ein Stab (3) gebildet wird.

## Revendications

1. Procédé de traitement pour traiter une bande (2) avec laquelle il est possible de réaliser une tige (3) destinée à un article à fumer de l'industrie du tabac, dans lequel la bande (2) comprend un composant principal et au moins un composant supplémentaire ; le procédé comprenant les étapes suivantes :
- faire avancer la bande (2) le long d'une trajectoire d'avancement (P) ;
- effectuer un traitement de ladite bande (2) ;
- collecter la bande traitée pour réaliser la tige (3) ;
dans lequel il comprend en outre une étape de :
- réaliser une inspection hyperspectrale de la bande (2) pour obtenir une mesure quantitative du composant supplémentaire dans la bande (2) ;
dans lequel ladite étape de réaliser une inspection hyperspectrale comprend en outre les étapes de :
- obtenir une image hyperspectrale d'une zone (201) de la bande (2) ;
- subdiviser la zone (201) en une pluralité de portions (202) ;
- obtenir, dans chaque portion (202), une pluralité de mesures quantitatives du composant supplémentaire dans les positions respectives ;
- attribuer à chaque portion (202) une mesure respective égale à une valeur représentative de la pluralité desdites mesures quantitatives obtenues.

2. Procédé selon la revendication 1, dans lequel ladite étape d'obtenir une image hyperspectrale comprend les étapes suivantes :
- émettre des rayonnements électromagnétiques sur au moins une partie de bande (2) dans une gamme spectrale contenant une pluralité de bandes de longueurs d'onde contiguës ;
- recevoir les rayonnements correspondants de la bande (2) à partir de ladite partie dans un appareil optique hyperspectral (701) ;
- reconstruire un cube hyperspectral de la zone (201) de la bande (2) à partir desdits rayonnements reçus ;
- obtenir une image hyperspectrale à partir dudit cube hyperspectral.

3. Procédé selon l'une quelconque des revendications précédentes, dans lequel le composant supplémentaire est choisi parmi les alcools, les esters de l'acide acétique, l'eau et leurs mélanges.

4. Procédé selon la revendication 3, dans lequel le composant supplémentaire est choisi parmi le menthol, le propylène glycol, le glycérol, la triacétine, l'eau et leurs mélanges, de préférence parmi le glycérol, l'eau et leurs mélanges.

5. Procédé selon l'une quelconque des revendications 2 à 4, dans lequel l'étape d'émettre des rayonnements électromagnétiques comprend utiliser une plage spectrale comprise entre 400 nm et 4000 nm, de préférence comprise entre 950 nm et 1700 nm, encore plus préférablement comprise entre 1250 et 1600 nm.

6. Procédé selon l'une quelconque des revendications précédentes, et comprenant l'étape supplémentaire d'ajuster ladite étape de traiter en fonction de la mesure quantitative obtenue du composant supplémentaire.

7. Procédé selon l'une quelconque des revendications précédentes, et dans lequel l'étape de traiter la bande (2) comprend une étape de sertir la bande (2) entre deux rouleaux de sertissage (502, 503) couplés de manière opérationnelle afin de réaliser une pluralité de lignes de pliage longitudinales facilitées sur la bande (2) et dans lequel l'étape de collecter comprend collecter progressivement la bande sertie jusqu'à former une tige (3) à partir de celle-ci.

8. Procédé selon la revendication 7, lorsqu'elle dépend de la revendication 6, dans lequel l'étape d'ajuster l'étape de traiter comprend ajuster une distance réciproque entre lesdits deux rouleaux de sertissage (502, 503) en fonction de la mesure quantitative obtenue du composant supplémentaire.

9. Procédé selon l'une quelconque des revendications 1 à 6, dans lequel l'étape de traiter comprend couper la bande (2) entre deux rouleaux de coupe couplés de manière opérationnelle l'un à l'autre pour réaliser au moins une coupe longitudinale sur la bande afin de subdiviser la bande en au moins deux bandes ayant une petite largeur et dans lequel l'étape de collecter comprend collecter progressivement la bande coupée jusqu'à former la bande coupée en une tige (3).

10. Procédé selon l'une quelconque des revendications précédentes, dans lequel ladite étape de réaliser l'inspection hyperspectrale pour obtenir la mesure quantitative du composant supplémentaire est une étape de mesurer qui est effectuée suite à une étape d'initialisation ; et dans lequel l'étape d'initialisation comprend une étape de réaliser au moins une inspection hyperspectrale d'un objet ayant des caractéristiques connues et qui est différent de la bande (2) afin d'ajuster des paramètres de fonctionnement de l'inspection hyperspectrale réalisée par la suite lors de l'étape de mesurer.

11. Unité de traitement pour traiter une bande (2), avec laquelle il est possible de réaliser une tige (3) destinée à un article à fumer de l'industrie du tabac, dans laquelle la bande (2) comprend un composant principal et au moins un composant supplémentaire ; l'unité (1) comprenant :
- un ensemble d'avancement (4) de la bande (2) qui est configuré pour faire avancer la bande (2) le long d'une trajectoire d'avancement (P) ;
- une station de traitement (5) pour traiter ladite bande (2) ;
- une station de collecte (6) pour collecter la bande (2) traitée et réaliser la tige (3), dans laquelle l'unité (1) comprend en outre :
- une station d'inspection hyperspectrale (7) de la bande (2), configurée pour obtenir une mesure quantitative du composant supplémentaire, dans laquelle ladite station d'inspection (7) est agencée le long de la trajectoire d'avancement (P) ;
dans laquelle la station d'inspection hyperspectrale (7) est configurée pour obtenir une image hyperspectrale d'une zone (201) de la bande (2) subdivisée en une pluralité de portions (202) et comprend :
- un appareil optique hyperspectral (701), qui est configuré pour obtenir, dans chaque portion (202), une pluralité de mesures quantitatives du composant supplémentaire dans des positions respectives ;
- un dispositif de traitement, qui est configuré pour attribuer à chaque portion (202) une valeur représentative de la pluralité de mesures obtenues par l'appareil optique hyperspectral (701) dans la portion (202).

12. Unité selon la revendication 11, dans laquelle la station d'inspection hyperspectrale (7) comprend en outre un générateur/émetteur de rayonnements électromagnétiques (702), qui est configuré pour émettre des rayonnements électromagnétiques sur au moins une partie de bande (2) dans une plage spectrale contenant une pluralité de bandes de longueurs d'onde contiguës ; et dans laquelle l'appareil optique hyperspectral (701) est configuré pour :
- recevoir les radiations correspondantes de ladite partie de bande (2) ;
- reconstruire un cube hyperspectral de la zone (201) de la bande (2) à partir des rayonnements reçus ;
- obtenir une image hyperspectrale à partir dudit cube hyperspectral.

13. Unité selon la revendication 12, dans laquelle le générateur/émetteur de rayonnements électromagnétiques (702) est configuré pour émettre des rayonnements électromagnétiques dans une plage spectrale comprise entre 400 nm et 4000 nm, de préférence comprise entre 950 nm et 1700 nm, encore plus préférablement comprise entre 1250 nm et 1600 nm, et dans laquelle l'appareil optique hyperspectral (701) est respectivement configuré pour acquérir des hyperspectra compris entre 400 nm et 4000 nm, de préférence entre 950 nm et 1700 nm, encore plus préférablement compris entre 1250 nm et 1600 nm.

14. Unité selon l'une des revendications 11 à 13, dans laquelle la station de traitement (5) comprend une station de sertissage (501), qui comprend deux rouleaux de sertissage (503, 504) couplés de manière opérationnelle afin de réaliser une pluralité de lignes de pliage longitudinales facilitées sur la bande (2), et dans laquelle la station de collecte (6) est configurée pour collecter progressivement la bande sertie jusqu'à former une tige (3) à partir de celle-ci.

15. Unité selon l'une des revendications 11 à 14, dans laquelle la station de traitement (5) comprend une station de coupe, qui comprend deux rouleaux de coupe couplés de manière opérationnelle l'un à l'autre afin de réaliser au moins une coupe longitudinale sur la bande (2) et de subdiviser la bande (2) en une pluralité de bandes ayant une petite largeur, et dans laquelle la station de collecte (6) est configurée pour collecter progressivement la bande coupée jusqu'à former une tige (3) à partir de celle-ci.
